# EUROPÄISCHE PATENTSCHRIFT

(11) **EP 3 684 546 B1**
(45) Veröffentlichungstag und Bekanntmachung des Hinweises auf die Patenterteilung: **04.12.2024**
(21) Anmeldenummer: 18778836.9
(22) Anmeldetag: 14.09.2018
(51) Int. Cl.: B23Q 11/00

(54) **WERKZEUGMASCHINENVORRICHTUNG ZU EINER STEUERUNG UND/ODER REGELUNG ZUMINDEST EINER WERKZEUGMASCHINENFUNKTION EINER WERKZEUGMASCHINE**
MACHINE TOOL DEVICE FOR OPEN-LOOP AND/OR CLOSED-LOOP CONTROL OF AT LEAST ONE MACHINE TOOL FUNCTION OF A MACHINE TOOL
DISPOSITIF DE MACHINE-OUTIL POUR LA COMMANDE ET/OU LA RÉGULATION D'AU MOINS UNE FONCTION DE MACHINE-OUTIL D'UNE MACHINE-OUTIL

(30) Priorität: 21.09.2017 DE 102017216697
(43) Veröffentlichungstag der Anmeldung: 29.07.2020
(73) Patentinhaber: Robert Bosch GmbH, 70442 Stuttgart (DE)
(72) Erfinder: WIKER, Juergen, 70374 Stuttgart (DE); SCHNEIDER, Matthias, 70374 Stuttgart (DE)
(86) Internationale Anmeldenummer: PCT/EP2018/074946
(87) Internationale Veröffentlichungsnummer: WO 2019/057639

(56) Entgegenhaltungen:
- DE-A1- 102011 089 343
- DE-A1- 102014 209 032
- DE-A1- 102015 205 172
- US-A- 5 584 619
- US-A1- 2014 166 323

## Beschreibung

### Stand der Technik

Aus der US 2013/0187587 A1 ist bereits eine Werkzeugmaschinenvorrichtung zu einer Steuerung und/oder Regelung zumindest einer Werkzeugmaschinenfunktion einer tragbaren Werkzeugmaschine mit einer Erfassungseinheit mit zumindest einer Sensoreinheit zur Erfassung von Kenngrößen der tragbaren Werkzeugmaschine, insbesondere von Kenngrößen eines Motorbetriebs der tragbaren Werkzeugmaschine, bekannt.

Die US 2014/166323 A1 offenbart einen Satz von Parametern für den sicheren Betrieb eines angetriebenen Hand-Elektrowerkzeugs, das mit Sensoren, insbesondere einem Beschleunigungssensor, ausgestattet ist, wobei eine Rechenschaltung des Hand-Elektrowerkzeugs bestimmt, ob die Beschleunigung des Werkzeugs innerhalb der sicheren Betriebsparameter liegt.

Die DE10 2014 209032 A1 bildet die Basis für die Oberbegriffe der unabhängigen Ansprüche.

### Offenbarung der Erfindung

Die Erfindung geht aus von einer Werkzeugmaschinenvorrichtung zu einer Steuerung und/oder Regelung zumindest einer Werkzeugmaschinenfunktion einer Werkzeugmaschine, insbesondere einer tragbaren Werkzeugmaschine, mit zumindest einer Erfassungseinheit zu einer Erfassung zumindest einer Kenngröße der Werkzeugmaschine und/oder eines an der Werkzeugmaschine angeordneten Bearbeitungswerkzeugs.

Erfindungsgemäß umfasst die Werkzeugmaschinenvorrichtung zumindest eine Bremseinheit, wobei zumindest eine Bremsfunktion der Bremseinheit in Abhängigkeit von der zumindest einen erfassten Kenngröße zumindest teilweise automatisch, und zwar dynamisch, anpassbar ist.

Unter einer "Werkzeugmaschine" soll hier insbesondere eine Maschine zu einer Bearbeitung von Werkstücken verstanden werden. Die Werkzeugmaschine kann akkubetrieben oder kabelgebunden ausgebildet sein. Insbesondere ist die tragbare Werkzeugmaschine als Oszillationswerkzeugmaschine mit einem an der Oszillationswerkzeugmaschine angeordneten und/oder anordenbaren, oszillierend angetriebenen Werkzeug ausgebildet, wobei das oszillierend angetriebene Werkzeug mit einer Oszillationsfrequenz, vorzugsweise in einem kHz-Bereich, angetrieben werden kann. Besonders bevorzugt ist die Werkzeugmaschine als Winkelschleifmaschine ausgebildet. Die Werkzeugmaschine kann als akkubetriebene Winkelschleifmaschine oder als kabelgebundene Winkelschleifmaschine ausgebildet sein. Es ist jedoch denkbar, dass die Werkzeugmaschine eine andere, einem Fachmann als sinnvoll erscheinende Ausgestaltung aufweist, wie beispielsweise eine Ausgestaltung als Kettensäge, als Gartengerät, als Elektrohobel, als Bohrmaschine, als Schleifmaschine, als Bohr- und/oder Meißelhammer oder als Multifunktionsmaschine. Unter einer "tragbaren Werkzeugmaschine" soll insbesondere eine Werkzeugmaschine verstanden werden, welche von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg.

Unter einem "Bearbeitungswerkzeug" soll hier insbesondere ein mittelbar oder unmittelbar an der Werkzeugmaschine angeordnetes und/oder anordenbares Werkzeug verstanden werden, welches in zumindest einem Betriebszustand zumindest teilweise in einem direkten Kontakt mit wenigstens einem Werkstück steht und das Werkstück bearbeitet.

Unter "dynamisch" soll hier zeitlich kontinuierlich aktiv oder innerhalb einer Zeitperiode oder für eine zeitliche Dauer eines Vorgangs aktiv oder passiv veränderbar verstanden werden. Darunter, dass eine Bremsfunktion dynamisch anpassbar ist, soll verstanden werden, dass eine Wirkung der Bremsfunktion einen nicht statischen, zeitlich variablen und/oder für eine Dauer eines Vorgangs zeitlich beschränkten und/oder an einen Wert einer Kenngröße angepassten, kontinuierlich gesteuerten und/oder geregelten Verlauf aufweist. Insbesondere ist die Bremsfunktion in einem Zeitbereich, in welchem sich ein Bewegungszustand des Bearbeitungswerkzeugs verändert, dynamisch anpassbar. Insbesondere soll dadurch ein abruptes, nicht variables Abbremsen mit einem konstanten angelegten Bremsmoment verhindert werden. Unter "vorgesehen" soll insbesondere speziell programmiert, speziell ausgelegt und/oder speziell ausgestattet verstanden werden.

Darunter, dass eine Vorrichtung und/oder eine Einheit zu einer bestimmten Funktion vorgesehen ist, soll insbesondere verstanden werden, dass die Vorrichtung und/oder die Einheit diese bestimmte Funktion in zumindest einem Anwendungs- und/oder Betriebszustand erfüllt und/oder ausführt.

Unter einer "Kenngröße" soll insbesondere ein Betriebsparameter verstanden werden, welcher vorzugsweise mit einem physikalischen und/oder chemischen Zustand einer Werkzeugmaschine und/oder eines an der Werkzeugmaschine angeordneten Bearbeitungswerkzeugs und/oder mit einer physikalischen und/oder chemischen Eigenschaft einer Umgebung korreliert ist. Insbesondere kann die Kenngröße mit einer räumlichen Lage, insbesondere einer Position und/oder Orientierung, insbesondere bezüglich eines Referenzpunkts, mit einem Bewegungs- und/oder Beschleunigungszustand, einer Temperatur, einem magnetischen Feld, einem elektrischen Feld, einer elektromagnetischen Strahlung, einer Drehzahl und/oder einem Drehmoment eines Motors der Werkzeugmaschine, einer Drehzahl und/oder einem Drehmoment eines Teils der Werkzeugmaschine und/oder einem an der Werkzeugmaschine angeordneten Bearbeitungswerkzeug und/oder einer weiteren, dem Fachmann als sinnvoll erscheinenden Eigenschaft korreliert sein.

Unter einer "Erfassungseinheit" soll insbesondere eine Einheit verstanden werden, die dazu vorgesehen ist, zumindest eine Kenngröße zu erfassen, wobei eine Erfassung aktiv, wie insbesondere durch Erzeugen und Aussenden eines elektrischen Messsignals, und/oder passiv, wie insbesondere durch eine Erfassung von Eigenschaftsänderungen der Erfassungseinheit, erfolgen kann.

Insbesondere kann die Erfassungseinheit ein oder mehrere Erfassungselemente aufweisen. Das Erfassungselement ist insbesondere dazu vorgesehen, zumindest eine bestimmte Kenngröße zu erfassen, wobei eine Erfassung aktiv, wie insbesondere durch Erzeugen und Aussenden eines elektrischen Messsignals, und/oder passiv, wie insbesondere durch eine Erfassung von Eigenschaftsänderungen des Erfassungselements, erfolgen kann. Vorzugsweise weist das Erfassungselement zumindest einen Sensor auf. Insbesondere kann der Sensor als ein mechanischer, kapazitiver, resistiver, magnetischer, insbesondere geomagnetischer, elektrischer, elektromagnetischer, akustischer und/oder optischer Sensor ausgebildet sein. Der Sensor kann insbesondere als Leistungssensor, optischer Sensor, Gyroskop, Bewegungssensor, Beschleunigungssensor, Drehzahlsensor, Drucksensor, Temperatursensor, Infrarotsensor und/oder Orientierungssensor ausgebildet sein.

Die Erfassungseinheit kann insbesondere zu einer durch einen Benutzer und/oder eine Maschine initiierten und/oder vorteilhaft zu einer automatischen und/oder automatisierten Erfassung des von der Erfassungseinheit und/oder zumindest einem Erfassungselement bereitgestellten Signals vorgesehen sein, beispielsweise kontinuierlich, in vorzugsweise regelmäßigen zeitlichen Abständen und/oder in Abhängigkeit von wenigstens einem definierten Auslöseereignis. Vorzugsweise ist die Bremseinheit zu einem Durchführen eines Bremsvorgangs vorgesehen, wobei das Bearbeitungswerkzeug relativ zu einem Werkzeugmaschinengehäuse abbremsbar ist. Der Bremsvorgang erfolgt in Abhängigkeit von der erfassten Kenngröße. Zumindest eine Bremsfunktion der Bremseinheit ist mittels einer Steuer- und/oder einer Regeleinheit automatisch, und zwar dynamisch, anpassbar. Insbesondere ist das Bearbeitungswerkzeug bis zu einem annähernd vollständigen Stillstand des Bearbeitungswerkzeugs abbremsbar, wobei die Bewegungsenergie des Bearbeitungswerkzeugs zumindest im Wesentlichen vollständig in eine andere Energieform überführt ist. Es ist denkbar, dass das Bearbeitungswerkzeug kurzzeitig, durch Bremsimpulse teilweise, und zwar dynamisch, abbremsbar ist. Dadurch kann ein besonders vorteilhafter Bremsvorgang erfolgen. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Insbesondere ist das Betriebsprogramm dazu vorgesehen, empfangene Daten zu verarbeiten. Hierbei sind die Steuer- und/oder einer Regeleinheit, die Erfassungseinheit und die Bremseinheit vorzugsweise zu einer elektronischen Übertragung von Daten drahtgebunden oder drahtlos miteinander verbunden. Insbesondere können die Steuer- und/oder Regeleinheit, die Erfassungseinheit und die Bremseinheit Daten empfangen und/oder Daten untereinander oder an weitere Einheiten übertragen.

Durch eine erfindungsgemäße Ausgestaltung kann vorteilhaft eine gattungsmäßige Werkzeugmaschinenvorrichtung mit verbesserten Bremseigenschaften bereitgestellt werden. Insbesondere kann eine an eine Betriebssituation der Werkmaschine angepasste Bremsfunktion bereitgestellt werden. Es können vorteilhaft eine erhöhte Betriebssicherheit sowie ein verbesserter Betriebskomfort bei einem Betrieb der Werkzeugmaschine durch einen Bediener erzielt werden.

Zudem wird vorgeschlagen, dass die Erfassungseinheit ein Antriebserfassungselement zur Erfassung einer Antriebskenngröße einer Antriebseinheit der Werkzeugmaschine und/oder des Bearbeitungswerkzeugs aufweist, wobei die Bremsfunktion in Abhängigkeit von der Antriebskenngröße zumindest teilweise automatisch anpassbar ist. Insbesondere kann die Antriebskenngröße Kenngrößen umfassen, welche zumindest mit einem Betriebszustand einer Antriebseinheit der Werkzeugmaschine und/oder des Bearbeitungswerkzeugs und/oder von Komponenten der Antriebseinheit, wie beispielsweise eines Motors, von Kugellagern, Zahnrädern, Bewegungswandlerelementen und/oder Antriebswellen und dergleichen, korreliert sind. Die Antriebskenngröße kann in Form eines Antriebsstroms, einer Antriebsspannung, einer Antriebsleistung, eines elektrischen Antriebswiderstands, einer elektromotorischen Kraftkenngröße der Antriebseinheit, einer Antriebsgeschwindigkeit oder als eine weitere, einem Fachmann als sinnvoll erscheinende Antriebskenngröße ausgebildet sein. Insbesondere kann die Antriebskenngröße in Form eines Antriebsdrehmoments erfassbar sein. Das Antriebserfassungselement kann insbesondere zumindest einen Antriebserfassungssensor umfassen. Der Antriebserfassungssensor kann vorzugsweise als Antriebsstromsensor, Antriebsspannungssensor, Antriebsleistungssensor, Antriebswiderstandssensor, elektromotorischer Kraftkenngrößensensor der Antriebseinheit oder als Antriebsgeschwindigkeitssensor ausgebildet sein. Hierdurch kann die Bremsfunktion besonders präzise an eine Betriebssituation und/oder an einen Zustand der Werkzeugmaschine und/oder des Bearbeitungswerkzeugs angepasst werden. Insbesondere können unterschiedliche Bearbeitungswerkzeuge durch Anpassung der Bremsfunktion vorteilhaft abgebremst werden, wobei eine geeignete, insbesondere kürzeste, Bremszeit sowie eine verschleißoptimierte und eine komfortable Brems- und Anlaufzeit für ein jeweiliges Bearbeitungswerkzeug ermittelt wird.

Des Weiteren wird vorgeschlagen, dass die Antriebskenngröße eine Anlaufkenngröße umfasst. Insbesondere weist die Anlaufkenngröße Anlaufkenngrößenparameter auf, welche während eines dynamischen Übergangs der Werkzeugmaschine und/oder des Bearbeitungswerkzeugs von einem Ruhezustand der Werkzeugmaschine und/oder des Bearbeitungswerkzeugs in zumindest einen Betriebszustand der Werkzeugmaschine und/oder des Bearbeitungswerkzeugs erfassbar sind, in welchem das Werkstück bearbeitbar ist. Die Anlaufkenngröße kann in Form einer Anlaufleistung, eines Anlaufstroms, einer Anlaufspannung, eines elektrischen Anlaufwiderstands, einer elektromotorischen Anlaufkraftkenngröße der Antriebseinheit, einer Anlaufgeschwindigkeit, eines Anlaufdrehmoments oder als eine weitere, einem Fachmann als sinnvoll erscheinende Anlaufkenngröße ausgebildet sein. Das Antriebserfassungselement kann insbesondere zumindest einen Anlauferfassungssensor umfassen. Der Anlauferfassungssensor kann insbesondere als Anlaufstromsensor, Anlaufspannungssensor, Anlaufleistungssensor, Anlaufwiderstandssensor, Anlaufzeitsensor oder als elektromotorischer Anlaufkraftkenngrößensensor ausgebildet sein. Dadurch kann eine Trägheit der Werkzeugmaschine und/oder des Bearbeitungswerkzeugs, insbesondere während eines Anlaufbetriebszustands, ermittelt werden und die Bremsfunktion gezielt angepasst werden.

Ferner wird vorgeschlagen, dass die Antriebskenngröße eine Drehzahlkenngröße umfasst. Insbesondere kann die Antriebskenngröße eine Drehzahlkenngröße der Werkzeugmaschine, insbesondere der Antriebseinheit der Werkzeugmaschine, und/oder des Bearbeitungswerkzeugs umfassen. Insbesondere kann die Drehzahlkenngröße als Drehzahl, Drehgeschwindigkeit und/oder Drehrichtung ausgebildet sein, wobei die Drehzahlkenngröße direkt oder indirekt messbar sein kann. Das Antriebserfassungselement kann insbesondere zumindest einen Drehzahlsensor umfassen. Insbesondere erfasst der Drehzahlsensor Änderungen eines magnetischen Feldes, welches mit einer Drehzahl der Werkzeugmaschine und/oder des Bearbeitungswerkzeugs korreliert ist. Hierdurch kann mittels der Drehzahlkenngröße ein Betriebszustand der Werkzeugmaschine und/oder des Bearbeitungswerkzeugs ermittelt werden und vorteilhaft die Bremsfunktion geeignet angepasst werden. Hierdurch kann die Betriebssicherheit der Werkzeugmaschine erhöht werden.

Insbesondere kann mittels der Antriebskenngröße und der Drehzahlkenngröße eine Anlaufzeit bis zu einem Erreichen einer festgelegten Nenndrehzahl der Werkzeugmaschine und/oder des Bearbeitungswerkzeugs ermittelt werden. Dadurch kann die Bremsfunktion angepasst und/oder optimiert werden.

Darüber hinaus wird vorgeschlagen, dass die Antriebskenngröße eine Drehmomentkenngröße umfasst. Die Drehmomentkenngröße kann in Form einer Drehmomentleistung, eines Drehmomentstroms, einer Drehzahl und/oder einer elektromotorischen Drehmomentkraftkenngröße der Antriebseinheit ausgebildet sein. Das Antriebserfassungselement kann insbesondere zumindest einen Drehmomentsensor umfassen. Der Drehmomentsensor kann insbesondere als Leistungssensor und/oder als Drehzahlsensor ausgebildet sein. Dadurch kann vorteilhaft ein Betriebszustand der Werkzeugmaschine und/oder des Bearbeitungswerkzeugs ermittelt werden. Beispielsweise kann ein Leerlauf der Werkzeugmaschine und/oder des Bearbeitungswerkzeugs von einem Bearbeitungsbetriebszustand unterschieden werden. Ferner ist eine Unterscheidung zwischen Werkzeugen mit unterschiedlich großen Drehmomenten möglich. Hierdurch ist die Bremsfunktion der Werkzeugmaschinenvorrichtung gezielt anpassbar. Dadurch kann der Bediener vor Verletzungen während eines Betriebs der Werkzeugmaschine bewahrt werden.

Insbesondere können der Anlauferfassungssensor und/oder der Drehzahlsensor und/oder der Drehmomentsensor als ein Sensor oder zumindest teilweise einstückig ausgebildet sein. Darunter, dass zwei oder mehr Sensoren "teilweise einstückig" ausgebildet sind, soll insbesondere verstanden werden, dass die Sensoren zumindest ein, insbesondere zumindest zwei, vorteilhaft zumindest drei gemeinsame Elemente aufweisen, die Bestandteil, insbesondere funktionell wichtiger Bestandteil, beider oder mehrerer Sensoren sind. Es ist denkbar, dass ein Sensor mehrere Kenngrößen erfasst, beispielsweise die Drehzahlkenngröße und die Drehmomentkenngröße.

Weiterhin wird vorgeschlagen, dass die Erfassungseinheit ein Kickbackerfassungselement zur Erfassung einer Kickbackkenngröße der Werkzeugmaschine und/oder des Bearbeitungswerkzeugs aufweist und die Bremsfunktion in Abhängigkeit von der Kickbackkenngröße zumindest teilweise automatisch anpassbar ist. Das Kickbackerfassungselement kann insbesondere zumindest einen Kickbacksensor umfassen. Insbesondere berücksichtigt die Steuer- und/oder die Regeleinheit die Kickbackkenngröße, um die Bremsfunktion der Bremseinheit in zumindest einem Betriebszustand, beispielsweise bei einem schlagartigen Stoppen des Bearbeitungswerkzeugs, insbesondere zu einer Vermeidung einer unkontrollierten Bewegung der mit dem Bearbeitungswerkzeug verbundenen Werkzeugmaschine, geeignet anzupassen. Vorzugsweise ist der Kickbacksensor als Bewegungssensor und/oder Beschleunigungssensor und/oder Drehzahlsensor ausgebildet, wobei die Steuer- und/oder die Regeleinheit das Signal des Bewegungssensors und/oder Beschleunigungssensors und/oder Drehzahlsensors verarbeitet und insbesondere ein Blockieren des Bearbeitungswerkzeugs und eine Bewegung des Werkzeugmaschinengehäuses in Folge einer Impulsübertragung vom Bearbeitungswerkzeug auf das Werkzeugmaschinengehäuse erkennt.

Insbesondere ist es denkbar, dass das Kickbackerfassungselement und das Antriebserfassungselement einstückig ausgebildet sind. Darunter, dass zwei Einheiten "teilweise einstückig" ausgebildet sind, soll insbesondere verstanden werden, dass die Einheiten zumindest ein, insbesondere zumindest zwei, vorteilhaft zumindest drei gemeinsame Elemente, insbesondere gemeinsame Sensoren, aufweisen, die Bestandteil, insbesondere funktionell wichtiger Bestandteil, beider Einheiten sind. Insbesondere kann eine Überschreitung eines kritischen Grenzwerts der Drehmomentkenngröße als Kickbackkenngröße durch die Steuer- und/oder Regeleinheit interpretiert und die Bremsfunktion angepasst werden. Es ist auch denkbar, dass wenn ein Wert einer Drehzahlkenngrößenänderung innerhalb eines festgelegten Zeitbereichs, beispielsweise innerhalb einer Millisekunde, einen kritischen Grenzwert überschreitet, die Steuer- und/oder Regeleinheit die Bremsfunktion geeignet anpasst. Hierdurch kann eine gezielte Anpassung der Bremsfunktion unter Berücksichtigung der Kickbackkenngröße ermöglicht und eine größere Betriebssicherheit gewährleistet werden. Dabei kann der Bediener die Werkzeugmaschine kontrolliert weiter in Betrieb halten oder außer Betrieb setzen ohne eine Verletzung durch eine unkontrollierte Bewegung der Werkzeugmaschine und/oder durch einen unsicheren Stand und einen daraus folgenden möglichen Fall des Bedieners davonzutragen.

Zudem wird vorgeschlagen, dass die Erfassungseinheit ein Abnutzungserfassungselement zur Erfassung einer Abnutzungskenngröße der Werkzeugmaschine und/oder des Bearbeitungswerkzeugs aufweist und die Bremsfunktion in Abhängigkeit von der Abnutzungskenngröße zumindest teilweise automatisch anpassbar ist. Das Abnutzungserfassungselement kann insbesondere zumindest einen Abnutzungssensor umfassen. Insbesondere kann zumindest ein Sensor des Antriebserfassungselements als Abnutzungssensor ausgestaltet sein. Insbesondere kann die Abnutzungskenngröße mit einem Gewicht des Bearbeitungswerkzeugs korreliert sein, wobei insbesondere eine Gewichtsänderung des Bearbeitungswerkzeugs und/oder der Werkzeugmaschine erfassbar ist und somit eine Feststellung einer Abnutzung des Bearbeitungswerkzeugs und/oder der Werkzeugmaschine möglich ist. Insbesondere kann die Abnutzungskenngröße mit einer Zeit korreliert sein, welche für einen Brems- und/oder Anlaufvorgang des Bearbeitungswerkzeugs benötigt wird. Vorzugsweise ist die Abnutzungskenngröße indirekt bei einem Anlaufvorgang und/oder in einem laufenden Betriebszustand feststellbar, insbesondere durch Ermittlung eines Werts und/oder einer Wertänderung für einen Strom, eine Spannung, eine Leistung, eine Zeit, einen elektrischen Widerstand und/oder eine elektromotorischen Kraftkenngröße. Ein Vergleich der Werte und/oder einer Werteänderung, beispielsweise mit einer Referenzwertetabelle, kann Rückschlüsse auf einen Abnutzungszustand der Werkzeugmaschine und/oder des Bearbeitungswerkzeugs liefern. Der Abnutzungssensor kann insbesondere als Unwuchtsensor, Leistungssensor, Stromsensor, Spannungssensor, Widerstandssensor und/oder Kraftkenngrößensensor ausgebildet sein. Insbesondere sind das Abnutzungserfassungselement und das Antriebserfassungselement einstückig ausgebildet. Dadurch können aufgrund eines Einsatzes einer geringeren Komponentenanzahl Kosten reduziert werden. Hierdurch kann die Bremsfunktion auf einen Abnutzungszustand, insbesondere des Bearbeitungswerkzeugs, abgestimmt und insbesondere eine Zerstörung des Bearbeitungswerkzeugs und/oder der Werkzeugmaschine und/oder des zu bearbeitenden Werkstücks rechtzeitig unterbunden werden. Dadurch ist eine erhöhte Betriebssicherheit erreichbar.

Ferner wird vorgeschlagen, dass die Erfassungseinheit ein Lageerfassungselement zur Erfassung einer Lagekenngröße der Werkzeugmaschine und/oder des Bearbeitungswerkzeugs aufweist und die Bremsfunktion in Abhängigkeit von der Lagekenngröße zumindest teilweise automatisch anpassbar ist. Das Lageerfassungselement kann insbesondere zumindest einen Lagesensor umfassen. Insbesondere ist die Lagekenngröße zu einer Bestimmung einer räumlichen Lage, insbesondere einer Position und/oder Orientierung, der Werkzeugmaschine und/oder des Bearbeitungswerkzeugs und/oder einer relativen Lage, insbesondere einer Position und/oder Orientierung der Werkzeugmaschine und des Bearbeitungswerkzeugs relativ zueinander vorgesehen. Vorteilhaft ist die Lagekenngrö-ße mit einer Änderung einer räumlichen Lage der Werkzeugmaschine und/oder des Bearbeitungswerkzeugs verknüpft, wobei eine besonders schnelle zeitliche Änderung der räumlichen Lage der Werkzeugmaschine und/oder des Bearbeitungswerkzeugs eine Fehlfunktion, wie beispielsweise ein für den Bediener potentiell gefährliches Lösen des Bearbeitungswerkzeugs von der Werkzeugmaschine und/oder eine unkontrollierte Bewegung des Werkzeugs, anzeigen kann. Insbesondere kann der Lagesensor als Bewegungssensor ausgebildet sein. Es ist jedoch auch denkbar, dass der Lagesensor als Gyroskop, als Magnetometer zu einer Erfassung der Lage durch eine Messung eines Erdmagnetfelds und/oder als GPS-Sensor ausgebildet ist. Hierdurch kann die Bremsfunktion geeignet angepasst werden, sodass insbesondere kein zusätzliches Drehmoment der Werkzeugmaschine entstehen kann und somit die Betriebssicherheit gewährleistet und ein Verletzungsrisiko für den Bediener minimiert ist. Insbesondere kann dadurch ein Verdrehen und/oder Verrutschen der Werkzeugmaschine in den Händen des Bedieners verhindert werden.

Des Weiteren wird vorgeschlagen, dass die Erfassungseinheit ein Fallerfassungselement zur Erfassung einer Fallkenngröße bei einem Herunterfallen der Werkzeugmaschine und/oder des Bearbeitungswerkzeugs aufweist und die Bremsfunktion in Abhängigkeit von der Fallkenngröße zumindest teilweise automatisch anpassbar ist. Das Fallerfassungselement kann insbesondere zumindest einen Fallsensor umfassen. Insbesondere kann ein freier Fall der Werkzeugmaschine und/oder des Bearbeitungswerkzeugs erfasst werden. Insbesondere kann der Fallsensor als Bewegungs- und/oder Beschleunigungssensor ausgebildet sein. Vorteilhaft ist der Fallsensor als 6-Achsen-Bewegungssensor ausgebildet, welcher eine Beschleunigung und/oder eine Drehrate des Bearbeitungswerkzeugs und/oder der Werkzeugmaschine, insbesondere bezüglich 3 Achsen X, Y, Z des kartesischen Koordinatensystems, erfasst. Ferner kann der Fallsensor als piezoelektrischer Beschleunigungssensor, als ein auf einem Feder-Masse-Prinzip basierender Beschleunigungssensor oder als ein auf magnetischer Induktion basierender Beschleunigungssensor ausgebildet sein. Es ist auch denkbar, dass bei einem unbeabsichtigten Herunterfallen des Bedieners die Werkzeugmaschine geeignet abgebremst ist, wodurch eine zusätzliche Verletzungsgefahr reduziert werden kann. Eine geeignete Anpassung der Bremsfunktion kann vorteilhaft eine zu einer Anfangsbeschleunigung und einer Anfangsbewegungsrichtung der Werkzeugmaschine und/oder des Bearbeitungswerkzeugs während des freien Falls zusätzliche, durch eine nicht angepasste Bremsung verursachte Beschleunigung der Werkzeugmaschine und/oder des Bearbeitungswerkzeugs zumindest teilweise unterbinden. Hierdurch können insbesondere Betriebsunfälle vermieden werden und somit kann eine zusätzliche Betriebssicherheit erreicht werden. Insbesondere können das Lageerfassungselement und das Fallerfassungselement einstückig ausgebildet sein.

Darüber hinaus wird vorgeschlagen, dass die Erfassungseinheit ein Haltekrafterfassungselement zur Erfassung einer Haltekraftkenngröße der Werkzeugmaschine und/oder des Bearbeitungswerkzeugs aufweist und die Bremsfunktion in Abhängigkeit von der Haltekraftkenngröße zumindest teilweise automatisch anpassbar ist. Das Haltekrafterfassungselement kann insbesondere zumindest einen Haltekraftsensor umfassen. Unter einer "Haltekraftkenngröße" soll insbesondere eine Größe verstanden werden, welche mit einer Kraft korreliert ist, welche in Folge einer kraft-, form- und/oder stoffschlüssigen Verbindung zweier Verbindungspartner einer weiteren Kraft entgegenwirkt. Dabei wirkt die weitere Kraft darauf hin, die beiden Verbindungspartner räumlich zu trennen und/oder eine relative Position und/oder eine relative Orientierung der beiden Verbindungspartner zueinander zu verändern. Vorzugsweise besteht eine solche Verbindung zwischen der Werkzeugmaschine und dem Bediener. Insbesondere kann die Haltekraftkenngröße der Werkzeugmaschine eine sichere Verbindung zwischen Werkzeugmaschine und dem Bediener und somit beispielsweise eine Gefahr eines unbeabsichtigten Loslassens der Werkzeugmaschine erfassen und die Bremsfunktion geeignet anpassen. Vorzugsweise kann das Abbremsen des Bearbeitungswerkzeugs proportional zur Haltekraftkenngröße erfolgen. Insbesondere ist der Haltekraftsensor als Drucksensor, Infrarotsensor, Beschleunigungssensor und/oder als Bewegungssensor ausgebildet. Insbesondere verarbeitet die Steuer- und/oder Regeleinheit die Haltekraftkenngröße zusammen mit der Fallkenngröße und/oder mit der Kickbackkenngröße, da ein unbeabsichtigtes Loslassen der Werkzeugmaschine aufgrund eines Blockierens des an der Werkzeugmaschine angeordneten Bearbeitungswerkzeugs zu einem Fall der Werkzeugmaschine führen kann. So kann die Bremsfunktion effizienter angepasst werden. Hierdurch kann besonders vorteilhaft die Betriebssicherheit erhöht werden. Ferner kann vorteilhaft die Haltekraftkenngröße des Bearbeitungswerkzeugs mit einer sicheren Verbindung zwischen der Werkzeugmaschine und dem Bearbeitungswerkzeug korreliert sein. Dadurch können insbesondere eine vorteilhafte Kraftübertragung und eine korrekte Funktion der Werkzeugmaschine erreicht werden.

Weiterhin wird vorgeschlagen, dass die Erfassungseinheit ein Temperaturerfassungselement zur Erfassung einer Temperaturkenngröße der Werkzeugmaschine, insbesondere eines Teils der Werkzeugmaschine, und/oder des Bearbeitungswerkzeugs aufweist und die Bremsfunktion in Abhängigkeit von der Temperaturkenngröße zumindest teilweise automatisch anpassbar ist. Das Temperaturerfassungselement kann insbesondere zumindest einen Temperatursensor umfassen. Der Temperatursensor kann als Infrarotsensor, Widerstandsthermometer, Thermopaar oder als ein Sensor, welcher ein temperaturabhängiges elektrisches Signal erzeugt, ausgestaltet sein. Insbesondere kann eine Notbremsung initiiert werden, wenn eine kritische Temperatur überschritten ist. Vorteilhaft kann dadurch insbesondere eine Fehlfunktion und/oder eine Zerstörung aufgrund einer Überhitzung der Werkzeugmaschine und/oder des Bearbeitungswerkzeugs bei einem Bremsvorgang vermieden werden. Insbesondere kann hierdurch eine Brandgefahr bei dem Bremsvorgang der Werkzeugmaschine minimiert werden.

Ferner wird vorgeschlagen, dass die Erfassungseinheit ein Winkelerfassungselement zur Erfassung einer Winkelgeschwindigkeitskenngröße und/oder einer Winkelbeschleunigungskenngröße der Werkzeugmaschine und/oder des Bearbeitungswerkzeugs aufweist und die Bremsfunktion in Abhängigkeit von der Winkelgeschwindigkeitskenngröße und/oder einer Winkelbeschleunigungskenngröße zumindest teilweise automatisch anpassbar ist. Das Winkelerfassungselement kann insbesondere zumindest einen Winkelsensor umfassen. Insbesondere können/kann die Winkelgeschwindigkeitskenngröße und/oder die Winkelbeschleunigungskenngröße mit einer sicheren Positionierung und/oder Anordnung der Werkzeugmaschine und/oder des Bearbeitungswerkzeugs in zumindest einem Betriebszustand korrelieren. Bei einem Unterschreiten und/oder Überschreiten eines festgelegten Werts für eine Winkelgeschwindigkeit und/oder eine Winkelbeschleunigung kann eine automatische Anpassung der Bremsfunktion erfolgen. Vorteilhaft kann der Winkelsensor als Drehratensensor ausgebildet sein. Möglich ist ferner eine Ausgestaltung des Winkelsensors als Hallsensor, potentiometrischer Winkelsensor und/oder AMR- Winkelsensor. Insbesondere können/kann die Winkelgeschwindigkeit und/oder die Winkelbeschleunigung auf ein unsicheres Festhalten der Werkzeugmaschine durch den Bediener hinweisen. Dadurch kann vorteilhaft ein sicherer und effizienter Bremsvorgang durchgeführt werden. Insbesondere können das Lageerfassungselement und/oder das Fallerfassungselement und/oder das Winkelerfassungselement einstückig ausgebildet sein. Insbesondere können die Winkelgeschwindigkeitskenngröße und/oder eine Winkelbeschleunigungskenngröße und die Antriebskenngröße zur Steuerung und/oder Regelung der Bremsfunktion eingesetzt werden. So kann beispielsweise ein Abbremsen des Bearbeitungswerkzeugs an den Abnutzungszustand des Bearbeitungswerkzeugs angepasst werden. Insbesondere kann die Anpassung der Bremsfunktion in Abhängigkeit von der Winkelgeschwindigkeitskenngröße und/oder der Winkelbeschleunigungskenngröße mit der Haltekraftkenngröße erfolgen. Somit kann ein schnelles Abbremsen des Bearbeitungs-werkzeugs erreicht werden.

Zudem wird ein Verfahren zum Betrieb einer Werkzeugmaschinenvorrichtung vorgeschlagen, wobei zumindest eine Bremsfunktion der Werkzeugmaschinenvorrichtung in Abhängigkeit von zumindest einer erfassten Kenngröße der Werkzeugmaschine und/oder eines an der Werkzeugmaschine angeordneten Bearbeitungswerkzeugs zumindest teilweise automatisch, und zwar dynamisch, angepasst wird. Es kann vorteilhaft ein hoher Bedienkomfort realisiert werden. Insbesondere kann eine hohe Betriebssicherheit erreicht werden. Die erfindungsgemäße Werkzeugmaschinenvorrichtung und das Verfahren zum Betrieb der Werkzeugmaschinenvorrichtung sollen hierbei nicht auf die oben beschriebene Anwendung und Ausführungsform beschränkt sein. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: eine schematische Ansicht einer tragbaren Werkzeugmaschine mit einer Werkzeugmaschinenvorrichtung,
- Fig. 2: eine schematische Darstellung der Werkzeugmaschinenvorrichtung mit einer Erfassungseinheit in verschiedenen möglichen Ausgestaltungen und mit einer Bremseinheit und
- Fig. 3: ein Ablaufdiagramm eines Verfahrens zum Betrieb der Werkzeugmaschinenvorrichtung.

### Beschreibung der Ausführungsbeispiele

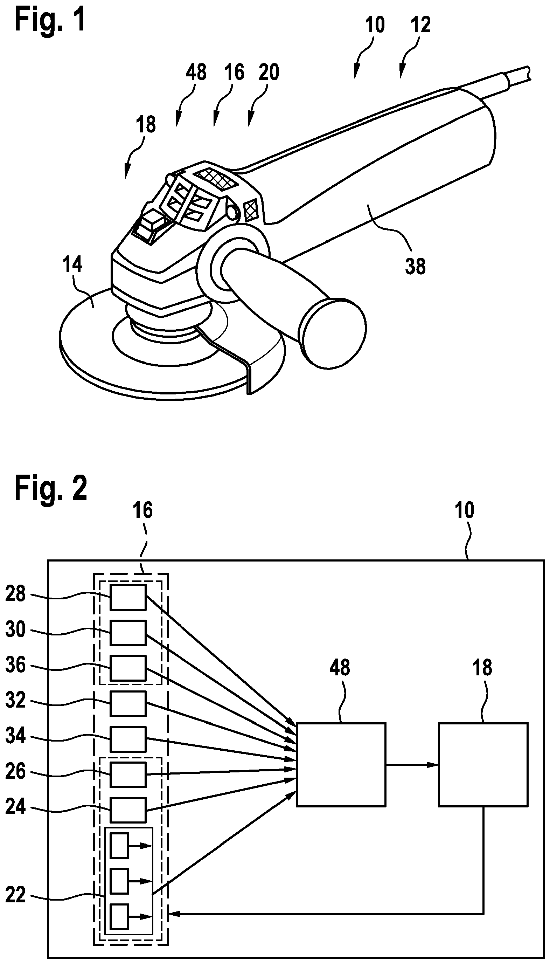

Figur 1 zeigt eine tragbare Werkzeugmaschine 12. Die Werkzeugmaschine 12 ist als eine Winkelschleifmaschine ausgebildet. An der Werkzeugmaschine 12 ist ein Bearbeitungswerkzeug 14 angeordnet Das Bearbeitungswerkzeug 14 ist als Trenn- oder Schleifscheibe ausgebildet. Die Werkzeugmaschine 12 umfasst eine Antriebseinheit 20, welche in zumindest einem Betriebszustand das Bearbeitungswerkzeug 14 antreibt. Die Werkzeugmaschine 12 weist ein Werkzeugmaschinengehäuse 38 auf. Die Antriebseinheit 20 ist zumindest teilweise in dem Werkzeugmaschinengehäuse 38 angeordnet.

Die Werkzeugmaschine 12 umfasst eine Werkzeugmaschinenvorrichtung 10. Die Werkzeugmaschinenvorrichtung 10 ist zu einer Steuerung und/oder Regelung zumindest einer Werkzeugmaschinenfunktion der Werkzeugmaschine 12 vorgesehen.

Die Werkzeugmaschinenvorrichtung 10 weist eine Bremseinheit 18 auf. Die Bremseinheit 18 ist zumindest teilweise im Werkzeugmaschinengehäuse 38 angeordnet. Die Bremseinheit 18 stellt eine Bremsfunktion bereit. Die Bremseinheit 18 ist dazu vorgesehen, das Bearbeitungswerkzeug 14 zumindest teilweise abzubremsen oder zu einem Stillstand zu bringen.

Die Werkzeugmaschinenvorrichtung 10 weist eine Steuer- und/oder Regeleinheit 48 auf, welche dazu vorgesehen ist, die Antriebseinheit 20 und die Bremseinheit 18 anzusteuern.

Die Werkzeugmaschinenvorrichtung 10 weist eine Erfassungseinheit 16 auf. Die Erfassungseinheit 16 ist zu einer Erfassung zumindest einer Kenngröße der Werkzeugmaschine 12 und/oder des an der Werkzeugmaschine 12 angeordneten Bearbeitungswerkzeugs 14 vorgesehen. Die Erfassungseinheit 16 ist zumindest teilweise im Werkzeugmaschinengehäuse 38 angeordnet. Die Erfassungseinheit 16 kann ein oder auch mehrere Erfassungselemente aufweisen (vgl. Fig. 2).

Die Steuer- und/oder Regeleinheit 48 ist mit der Erfassungseinheit 16 drahtlos verbunden oder drahtverbunden. Die Erfassungseinheit 16 übermittelt die erfassten Kenngrößen an die Steuer- und/oder Regeleinheit 48 (vgl. Fig. 2). Die durch die Erfassungselemente der Erfassungseinheit 16 bereitgestellten Kenngrößen sind einzeln oder in beliebiger Kombination mittels der Steuer- und/oder Regeleinheit 48 auswertbar. Die Steuer- und/oder Regeleinheit 48 kann zumindest eine Bremsfunktion der Bremseinheit 18 in Abhängigkeit von der zumindest einen durch die Erfassungseinheit 16 erfassten Kenngrößen anpassen.

Die Erfassungseinheit 16 kann ein Antriebserfassungselement 22 aufweisen. Das Antriebserfassungselement 22 ist zur Erfassung einer Antriebskenngröße der Antriebseinheit 20 der Werkzeugmaschine 12 und/oder des Bearbeitungswerkzeugs 14 vorgesehen. Insbesondere kann die Antriebseinheit 20 der Werkzeugmaschine 12 einen Motor, insbesondere einen Elektromotor, und Kraftübertragungselemente, beispielsweise eine Antriebswelle, Zahnräder und dgl., zu einer Übertragung einer Motorkraft auf das Bearbeitungswerkzeug 14 aufweisen. Die Bremsfunktion der Werkzeugmaschine 12 kann in Abhängigkeit von der Antriebskenngröße automatisch anpassbar sein. Die Anpassung der Bremsfunktion findet in einem dynamischen Drehzahlbereich, insbesondere während eines Bremsvorgangs, statt.

Die Antriebskenngröße kann eine Anlaufkenngröße umfassen. Die Erfassungseinheit 16 berücksichtigt die Anlaufkenngröße bei der Anpassung der Bremsfunktion der Bremseinheit 18. Die Anlaufkenngröße ist im dynamischen Drehzahlbereich, insbesondere während eines Hochlaufens der Werkzeugmaschine 12, insbesondere nach einem Einschalten der Werkzeugmaschine 12, aus einem Ruhezustand in zumindest einen Betriebszustand der Werkzeugmaschine 12 mit einem zumindest im Wesentlichen konstanten Drehzahlbereich erfassbar.

Insbesondere umfasst die Anlaufkenngröße eine für das Hochlaufen der Werkzeugmaschine 12 benötigte Zeit. Die Anlaufkenngröße umfasst eine verbrauchte Leistung beim Hochlaufen der Werkzeugmaschine 12, bis die Werkzeugmaschine 12 zumindest einen Betriebszustand zu einem Bearbeiten eines Werkstücks erreicht.

Die Antriebskenngröße kann eine Drehzahlkenngröße aufweisen. Die Drehzahlkenngröße weist einen Parameter für eine Drehzahl oder eine mit der Drehzahl korrelierte Größe des Bearbeitungswerkzeugs 14 und/oder der Werkzeugmaschine 12 oder eines Werkzeugmaschinenelements auf. Die Drehzahlkenngröße kann kontinuierlich oder in festgelegten Zeitabständen messbar sein. Die Drehzahlkenngröße ist indirekt, insbesondere durch eine Leistungsaufnahme der Werkzeugmaschine 12 in einem laufenden Betrieb und einem anschließenden Vergleich eines gemessenen Leistungsaufnahmewerts mit Referenzwerten, messbar. Die Drehzahlkenngröße kann für unterschiedliche Bearbeitungswerkzeuge 14 verschieden sein.

Die Antriebskenngröße kann eine Drehmomentkenngröße aufweisen. Die Drehmomentkenngröße gibt einen charakteristischen Wert für unterschiedliche Bearbeitungswerkzeuge 14 wieder. Insbesondere ist der charakteristische Wert der Drehmomentkenngröße mit einem Gewicht des Bearbeitungswerkzeugs 14 und/oder mit einer Gewichtsverteilung innerhalb des Bearbeitungswerkzeugs 14 korreliert. Die Drehmomentkenngröße kann indirekt bestimmbar sein. Insbesondere ist die Drehmomentkenngröße mittels eines Anlaufstroms bestimmbar. Zusätzlich könnte die Drehmomentkenngröße mit einer Zeit zum Hochlaufen der Werkzeugmaschine 12 und/oder des Bearbeitungswerkzeugs 14 korreliert sein.

Die Anlaufkenngröße und/oder die Drehzahlkenngröße und/oder die Drehmomentkenngröße sind zu einer Anpassung der Bremsfunktion der Bremseinheit 18 der Werkzeugmaschine 12 einzeln oder in ihrer beliebigen Kombination vorgesehen.

Die Erfassungseinheit 16 kann ein Abnutzungserfassungselement 26 aufweisen. Das Abnutzungserfassungselement 26 ist zur Erfassung einer Abnutzungskenngröße der Werkzeugmaschine 12 und/oder des Bearbeitungswerkzeugs 14 vorgesehen. Die Abnutzungskenngröße kann mit einer Gewichtsänderung des Bearbeitungswerkzeugs 14 korreliert sein. Das Abnutzungserfassungselement 26 erfasst indirekt die Gewichtsänderung des Bearbeitungswerkzeugs 14. Die Gewichtsänderung ist im dynamischen Drehzahlbereich, insbesondere beim Hochlaufen der Werkzeugmaschine 12 und/oder beim Bremsen der Werkzeugmaschine 12, messbar.

Das Abnutzungserfassungselement 26 kann separat von anderen Erfassungselementen ausgebildet sein. Es ist jedoch vorstellbar, dass das Abnutzungserfassungselement 26 und das Antriebserfassungselement 22 einstückig ausgebildet sind. Es ist auch denkbar, dass die Abnutzungskenngröße aus der Anlaufkenngröße und/oder der Drehzahlkenngröße und/oder der Drehmomentkenngrö-ße mit Hilfe von Referenztabellen bestimmbar ist. Die Erfassung der Abnutzungskenngröße ist insbesondere dazu vorgesehen, einen Abnutzungsgrad des Bearbeitungswerkzeugs 14 zu bestimmen. Durch die Erfassung der Abnutzungskenngröße kann eine Unterscheidung zwischen einem abgenutzten Bearbeitungswerkzeug 14 und einem neuen, vom abgenutzten Bearbeitungswerkzeug 14 verschiedenen Bearbeitungswerkzeug 14 erfolgen. Die Bremsfunktion ist in Abhängigkeit von der Abnutzungskenngröße zumindest teilweise automatisch anpassbar.

Die Erfassungseinheit 16 kann ein Lageerfassungselement 28 aufweisen. Das Lageerfassungselement 28 ist zur Erfassung einer Lagekenngröße der Werkzeugmaschine 12 und/oder des Bearbeitungswerkzeugs 14 vorgesehen. Die Bremsfunktion der Bremseinheit 18 der Werkzeugmaschinenvorrichtung 10 ist in Abhängigkeit von der Lagekenngröße zumindest teilweise automatisch anpassbar (vgl. Fig. 2). Die Lagekenngröße gibt eine dreidimensionale Orientierung der Werkzeugmaschine 12 und/oder des Bearbeitungswerkzeugs 14 wieder. Das Lageerfassungselement 28 zeigt eine unvorteilhafte und/oder gefährliche Orientierung der Werkzeugmaschine 12 und/oder des Bearbeitungswerkzeugs 14 an. Die Bremsfunktion der Bremseinheit 18 initiiert aufgrund eines übermittelten Signals des Lageerfassungselements 28 einen automatisch angepassten Notbremsvorgang.

Das Lageerfassungselement 28 kann vorteilhaft eine gewünschte Ausrichtung der Werkzeugmaschine 12 und/oder des Bearbeitungswerkzeugs 14, beispielsweise eine waagerechte oder eine senkrechte Ausrichtung, anzeigen. Es ist denkbar, dass insbesondere eine beliebige Orientierung der Werkzeugmaschine 12 und/oder des Bearbeitungswerkzeugs 14 zu einem gezielten Bearbeiten des Werkstücks vorgegeben werden kann. Die Bremsfunktion der Bremseinheit 18 ist an die vorgegebene Orientierung des Werkzeugmaschine 12 und/oder des Bearbeitungswerkzeugs 14 anpassbar.

Die Erfassungseinheit 16 kann ein Winkelerfassungselement 36 aufweisen. Das Winkelerfassungselement 36 ist zur Erfassung einer Winkelgeschwindigkeitskenngröße und/oder einer Winkelbeschleunigungskenngröße der Werkzeugmaschine 12 und/oder des Bearbeitungswerkzeugs 14 vorgesehen. Die Bremsfunktion kann in Abhängigkeit von der Winkelgeschwindigkeitskenngröße und/oder einer Winkelbeschleunigungskenngröße zumindest teilweise automatisch anpassbar sein (vgl. Fig. 2). Das Winkelerfassungselement 36 erfasst zu Beginn des Bremsvorgangs die Winkelgeschwindigkeitskenngröße und/oder die Winkelbeschleunigungskenngröße. Bei einem Überschreiten eines Grenzwerts für die Winkelgeschwindigkeitskenngröße und/oder die Winkelbeschleunigungskenngröße passt die Bremseinheit 18 die Bremsfunktion derart an, dass kein unkontrolliertes Verdrehen der Werkzeugmaschine 12 und/oder des Bearbeitungswerkzeugs 14 erfolgt. Bei einem Unterschreiten des Grenzwerts für die Winkelgeschwindigkeitskenngröße und/oder die Winkelbeschleunigungskenngröße erfolgt aufgrund der automatischen Anpassung der Bremsfunktion ein schnelleres Abbremsen der Werkzeugmaschine 12 und/oder des Bearbeitungswerkzeugs 14. Das Winkelerfassungselement 36 ist vorzugsweise als Drehratensensor ausgebildet.

Es ist denkbar, dass das Lageerfassungselement 28 und das Winkelerfassungselement 36 als eine Einheit in Form eines 6-Achsen-Bewegungssensors ausgebildet sind.

Die Erfassungseinheit 16 kann ein Fallerfassungselement 30 aufweisen. Das Fallerfassungselement 30 ist zur Erfassung einer Fallkenngröße bei einem Herunterfallen der Werkzeugmaschine 12 und/oder des Bearbeitungswerkzeugs 14 vorgesehen. Die Bremsfunktion ist in Abhängigkeit von der Fallkenngröße zumindest teilweise automatisch anpassbar (vgl. Fig. 2). Die Fallkenngröße erfasst ein unkontrolliertes Bewegungs- und/oder Beschleunigungsmuster der Werkzeugmaschine 12 und/oder des Bearbeitungswerkzeugs 14. Die Fallkenngröße umfasst eine Drehrate des Werkzeugmaschinengehäuses 38 der Werkzeugmaschine 12. Die Fallkenngröße umfasst die Drehzahlkenngröße des Bearbeitungswerkzeugs 14.

Die Bremsfunktion der Bremseinheit 18 verhindert das vollständige Abbremsen der Werkzeugmaschine 12 und/oder des Bearbeitungswerkzeugs 14 im Falle einer Überschreitung eines Grenzwerts der Drehrate des Werkzeugmaschinengehäuses 38. Damit verhindert die Bremsfunktion eine ungewollte Beschleunigung der Drehrate des Werkzeugmaschinengehäuses 38 aufgrund einer Drehimpulserhaltung zwischen dem Bearbeitungswerkzeug 14 und der Werkzeugmaschine 12.

Die Erfassungseinheit 16 kann ein Kickbackerfassungselement 24 aufweisen. Das Kickbackerfassungselement 24 ist zur Erfassung einer Kickbackkenngröße der Werkzeugmaschine 12 und/oder des Bearbeitungswerkzeugs 14 vorgesehen. Die Bremsfunktion ist in Abhängigkeit von der Kickbackkenngröße zumindest teilweise automatisch anpassbar (vgl. Fig. 2). Je nach Stärke des unkontrollierten Abbremsens des Bearbeitungswerkzeugs 14 beeinflusst die Erfassungseinheit 16 entsprechend die Bremsfunktion.

Die Erfassungseinheit 16 kann ein Haltekrafterfassungselement 32 aufweisen. Das Haltekrafterfassungselement 32 ist zur Erfassung einer Haltekraftkenngröße der Werkzeugmaschine 12 und/oder des Bearbeitungswerkzeugs 14 vorgesehen. Die Bremsfunktion ist in Abhängigkeit von der Haltekraftkenngröße zumindest teilweise automatisch anpassbar (vgl. Fig. 2). Vorzugsweise ist das Haltekrafterfassungselement 32 als Drucksensor ausgebildet. Eine Zeit zum vollständigen Abbremsen der Werkzeugmaschine 12 und/oder des Bearbeitungswerkzeugs 14 ist mit der Haltekraftkenngröße korreliert. Je größer eine auf die Werkzeugmaschine 12 und/oder das Bearbeitungswerkzeug 14 einwirkende Haltekraft ist, desto schneller ist die Werkzeugmaschine 12 und/oder das Bearbeitungswerkzeug 14 abbremsbar.

Die Erfassungseinheit 16 kann ein Temperaturerfassungselement 34 aufweisen. Das Temperaturerfassungselement 34 ist zur Erfassung einer Temperaturkenngröße der Werkzeugmaschine 12, insbesondere eines Teils der Werkzeugmaschine 12, und/oder des Bearbeitungswerkzeugs 14 vorgesehen. Die Bremsfunktion ist in Abhängigkeit von der Temperaturkenngröße zumindest teilweise automatisch anpassbar (vgl. Fig. 2). Die Temperaturkenngröße ist mit zumindest einem Betriebszustand der Werkzeugmaschine 12 und/oder des Bearbeitungswerkzeugs 14 korreliert. Bei einem Überhitzungsbetriebszustand der Werkzeugmaschine 12 und/oder des Bearbeitungswerkzeugs 14 leitet die Bremseinheit 18 eine Notbremsung ein. Alternativ ist die Bremsfunktion derart anpassbar, dass ein fortgesetzter Bearbeitungsbetriebszustand der Werkzeugmaschine 12 und/oder des Bearbeitungswerkzeugs 14 mit einer verringerten Hitzeentwicklung möglich ist.

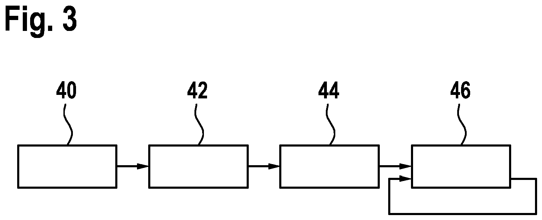

Figur 3 zeigt ein Ablaufdiagramm eines Verfahrens zum Betrieb einer Werkzeugmaschinenvorrichtung 10. Das Verfahren umfasst zumindest einen ersten Verfahrensschritt 40, in welchem mittels eines Erfassungselements oder mehrerer Erfassungselemente 22, 24, 26, 28, 30, 32, 34, 36 eine Kenngröße oder mehrere Kenngrößen simultan oder nacheinander erfasst werden.

Das Verfahren umfasst zumindest einen zweiten Verfahrensschritt 42, in welchem die erfasste Kenngröße oder die erfassten Kenngrößen zu einer Auswertung und/oder Verarbeitung an die Steuer- und/oder Regeleinheit 48 übertragen werden.

Das Verfahren umfasst zumindest einen dritten Verfahrensschritt 44, in welchem Steuerungs- und/oder Regelungssignale der Steuer- und/oder Regeleinheit 48 an die Bremseinheit 18 übertragen werden. Somit wird zumindest eine Bremskenngröße der Bremseinheit 18 in Abhängigkeit von einer oder mehreren Kenngrößen zumindest teilweise automatisch angepasst.

Das Verfahren umfasst zumindest einen vierten Verfahrensschritt 46, in welchem die jeweilige Kenngröße oder die jeweiligen Kenngrößen mittels des Erfassungselements oder der Erfassungselemente 22, 24, 26, 28, 30, 32, 34, 36 erneut erfasst und an die Steuer- und/oder Regeleinheit 48 übermittelt wird/werden. Im vierten Verfahrensschritt 46 wird die erneut erfasste Kenngröße oder werden die erneut erfassten Kenngrößen jeweils mit der im ersten Verfahrensschritt 40 erfassten Kenngröße oder den im ersten Verfahrensschritt 40 erfassten Kenngrö-ßen durch die Steuer- und/oder Regeleinheit 48 verglichen. Die Steuer- und/oder Regeleinheit 48 ermittelt ein Vergleichsergebnis. Zumindest eine Bremskenngrö-ße der Bremseinheit 18 wird mittels des Steuerungs- und/oder Regelungssignals der Erfassungseinheit 16 in Abhängigkeit von dem Vergleichsergebnis der Kenngrößen erneut angepasst. In zumindest einem Betriebszustand wird der vierte Verfahrensschritt 46 in einer Dauerschleife während eines gesamten Betriebs der Werkzeugmaschine 12 ausgeführt.

## Patentansprüche

1. Werkzeugmaschinenvorrichtung (10) zu einer Steuerung und/oder Regelung zumindest einer Werkzeugmaschinenfunktion einer Werkzeugmaschine (12), insbesondere einer tragbaren Werkzeugmaschine (12), mit zumindest einer Erfassungseinheit (16) zu einer Erfassung zumindest einer Kenngröße der Werkzeugmaschine (12) und/oder eines an der Werkzeugmaschine (12) angeordneten Bearbeitungswerkzeugs (14) und mit zumindest einer Bremseinheit (18), wobei zumindest eine Bremsfunktion der Bremseinheit (18) in Abhängigkeit von der zumindest einen erfassten Kenngröße zumindest teilweise automatisch, und zwar dynamisch, anpassbar ist, wobei die Bremsfunktion zeitlich kontinuierlich aktiv oder innerhalb einer Zeitperiode oder für eine zeitliche Dauer eines Vorgangs aktiv oder passiv veränderbar ist, **dadurch gekennzeichnet, dass** die Erfassungseinheit (16) ein Haltekrafterfassungselement (32) zur Erfassung einer Haltekraftkenngröße der Werkzeugmaschine (12) und/oder des Bearbeitungswerkzeugs (14) aufweist und die Bremsfunktion in Abhängigkeit von der Haltekraftkenngröße zumindest teilweise automatisch anpassbar ist, wobei eine Zeit zum vollständigen Abbremsen der Werkzeugmaschine (12) und/oder des Bearbeitungswerkzeugs (14) mit der Haltekraftkenngröße korreliert ist.

2. Werkzeugmaschinenvorrichtung (10) nach Anspruch 1, **dadurch gekennzeichnet, dass** die Erfassungseinheit (16) ein Antriebserfassungselement (22) zur Erfassung einer Antriebskenngröße einer Antriebseinheit (20) der Werkzeugmaschine (12) und/oder des Bearbeitungswerkzeugs (14) aufweist und die Bremsfunktion in Abhängigkeit von der Antriebskenngröße zumindest teilweise automatisch anpassbar ist.

3. Werkzeugmaschinenvorrichtung (10) nach Anspruch 2, **dadurch gekennzeichnet, dass** die Antriebskenngröße eine Anlaufkenngröße umfasst.

4. Werkzeugmaschinenvorrichtung (10) nach Anspruch 2 oder 3, **dadurch gekennzeichnet, dass** die Antriebskenngröße eine Drehzahlkenngröße umfasst.

5. Werkzeugmaschinenvorrichtung (10) nach einem der Ansprüche 2 bis 4, **dadurch gekennzeichnet, dass** die Antriebskenngröße eine Drehmomentkenngröße umfasst.

6. Werkzeugmaschinenvorrichtung (10) nach einem der vorhergehenden Ansprüche, **dadurch gekennzeichnet, dass** die Erfassungseinheit (16) ein Kickbackerfassungselement (24) zur Erfassung einer Kickbackkenngröße der Werkzeugmaschine (12) und/oder des Bearbeitungswerkzeugs (14) aufweist und die Bremsfunktion in Abhängigkeit von der Kickbackkenngröße zumindest teilweise automatisch anpassbar ist.

7. Werkzeugmaschinenvorrichtung (10) nach einem der vorhergehenden Ansprüche, **dadurch gekennzeichnet, dass** die Erfassungseinheit (16) ein Abnutzungserfassungselement (26) zur Erfassung einer Abnutzungskenngröße der Werkzeugmaschine (12) und/oder des Bearbeitungswerkzeugs (14) aufweist und die Bremsfunktion in Abhängigkeit von der Abnutzungskenngröße zumindest teilweise automatisch anpassbar ist.

8. Werkzeugmaschinenvorrichtung (10) nach einem der vorhergehenden Ansprüche, **dadurch gekennzeichnet, dass** die Erfassungseinheit (16) ein Lageerfassungselement (28) zur Erfassung einer Lagekenngröße der Werkzeugmaschine (12) und/oder des Bearbeitungswerkzeugs (14) aufweist und die Bremsfunktion in Abhängigkeit von der Lagekenngröße zumindest teilweise automatisch anpassbar ist.

9. Werkzeugmaschinenvorrichtung (10) nach einem der vorhergehenden Ansprüche, **dadurch gekennzeichnet, dass** die Erfassungseinheit (16) ein Fallerfassungselement (30) zur Erfassung einer Fallkenngröße bei einem Herunterfallen der Werkzeugmaschine (12) und/oder des Bearbeitungswerkzeugs (14) aufweist und die Bremsfunktion in Abhängigkeit von der Fallkenngröße zumindest teilweise automatisch anpassbar ist.

10. Werkzeugmaschinenvorrichtung (10) nach einem der vorhergehenden Ansprüche, **dadurch gekennzeichnet, dass** die Erfassungseinheit (16) ein Temperaturerfassungselement (34) zur Erfassung einer Temperaturkenngröße der Werkzeugmaschine (12), insbesondere eines Teils der Werkzeugmaschine (12), und/oder des Bearbeitungswerkzeugs (14) aufweist und die Bremsfunktion in Abhängigkeit von der Temperaturkenngröße zumindest teilweise automatisch anpassbar ist.

11. Werkzeugmaschinenvorrichtung (10) nach einem der vorhergehenden Ansprüche, **dadurch gekennzeichnet, dass** die Erfassungseinheit (16) ein Winkelerfassungselement (36) zur Erfassung einer Winkelgeschwindigkeitskenngröße und/oder einer Winkelbeschleunigungskenngröße der Werkzeugmaschine (12) und/oder des Bearbeitungswerkzeugs (14) aufweist und die Bremsfunktion in Abhängigkeit von der Winkelgeschwindigkeitskenngröße und/oder einer Winkelbeschleunigungskenngröße zumindest teilweise automatisch anpassbar ist.

12. Werkzeugmaschine (12), insbesondere tragbare Werkzeugmaschine (12), mit zumindest einer Werkzeugmaschinenvorrichtung (10) nach einem der vorhergehenden Ansprüche.

13. Verfahren zum Betrieb einer Werkzeugmaschinenvorrichtung (10), insbesondere nach einem der Ansprüchen 1 bis 11, wobei zumindest eine Bremsfunktion der Werkzeugmaschinenvorrichtung (10) in Abhängigkeit von zumindest einer erfassten Kenngröße der Werkzeugmaschine (12) und/oder eines an der Werkzeugmaschine (12) angeordneten Bearbeitungswerkzeugs (14) zumindest teilweise automatisch, und zwar dynamisch, angepasst wird, wobei die Bremsfunktion zeitlich kontinuierlich aktiv oder innerhalb einer Zeitperiode oder für eine zeitliche Dauer eines Vorgangs aktiv oder passiv verändert wird, **dadurch gekennzeichnet, dass** ein Haltekrafterfassungselement (32) einer Erfassungseinheit (16) der Werkzeugmaschinenvorrichtung (10) eine Haltekraftkenngröße der Werkzeugmaschine (12) und/oder des Bearbeitungswerkszeugs (14) erfasst und die Bremsfunktion in Abhängigkeit von der Haltekraftkenngröße zumindest teilweise automatisch angepasst wird, wobei die Zeit zum vollständigen Abbremsen der Werkzeugmaschine (12) und/oder des Bearbeitungswerkzeugs (14) mit der Haltekraftkenngröße korreliert ist.

## Claims

1. Power tool device (10) for open-loop and/or closed-loop control of at least one power tool function of a power tool (12), in particular a portable power tool (12), comprising at least one acquisition unit (16) for acquiring at least one characteristic variable of the power tool (12) and/or of a work tool (14) arranged on the power tool (12), and comprising at least one braking unit (18), wherein at least one braking function of the braking unit (18) can be adapted at least partially automatically, to be precise dynamically, in dependence on the at least one acquired characteristic variable, wherein the braking function can be actively changed continuously over time or can be actively or passively changed within a period of time or for a duration of a process, **characterized in that** the acquisition unit (16) has a holding-force acquisition element (32) for acquiring a holding-force characteristic variable of the power tool (12) and/or of the work tool (14) and the braking function can be adapted at least partially automatically in dependence on the holding-force characteristic variable, wherein a time for complete braking of the power tool (12) and/or of the work tool (14) is correlated with the holding-force characteristic variable.

2. Power tool device (10) according to Claim 1, **characterized in that** the acquisition unit (16) has a drive acquisition element (22) for acquiring a drive characteristic variable of a drive unit (20) of the power tool (12) and/or of the work tool (14) and the braking function can be adapted at least partially automatically in dependence on the drive characteristic variable.

3. Power tool device (10) according to Claim 2, **characterized in that** the drive characteristic variable comprises a startup characteristic variable.

4. Power tool device (10) according to Claim 2 or 3, **characterized in that** the drive characteristic variable comprises a rotational-speed characteristic variable.

5. Power tool device (10) according to one of Claims 2 to 4, **characterized in that** the drive characteristic variable comprises a torque characteristic variable.

6. Power tool device (10) according to one of the preceding claims, **characterized in that** the acquisition unit (16) has a kickback acquisition element (24) for acquiring a kickback characteristic variable of the power tool (12) and/or of the work tool (14) and the braking function can be adapted at least partially automatically in dependence on the kickback characteristic variable.

7. Power tool device (10) according to one of the preceding claims, **characterized in that** the acquisition unit (16) has a wear acquisition element (26) for acquiring a wear characteristic variable of the power tool (12) and/or of the work tool (14) and the braking function can be adapted at least partially automatically in dependence on the wear characteristic variable.

8. Power tool device (10) according to one of the preceding claims, **characterized in that** the acquisition unit (16) has a position acquisition element (28) for acquiring a position characteristic variable of the power tool (12) and/or of the work tool (14) and the braking function can be adapted at least partially automatically in dependence on the position characteristic variable.

9. Power tool device (10) according to one of the preceding claims, **characterized in that** the acquisition unit (16) has a fall acquisition element (30) for acquiring a fall characteristic variable if the power tool (12) and/or the work tool (14) falls down and the braking function can be adapted at least partially automatically in dependence on the fall characteristic variable.

10. Power tool device (10) according to one of the preceding claims, **characterized in that** the acquisition unit (16) has a temperature acquisition element (34) for acquiring a temperature characteristic variable of the power tool (12), in particular of a part of the power tool (12), and/or of the work tool (14) and the braking function can be adapted at least partially automatically in dependence on the temperature characteristic variable.

11. Power tool device (10) according to one of the preceding claims, **characterized in that** the acquisition unit (16) has an angle acquisition element (36) for acquiring an angular-velocity characteristic variable and/or an angular-acceleration characteristic variable of the power tool (12) and/or of the work tool (14) and the braking function can be adapted at least partially automatically in dependence on the angular-velocity characteristic variable and/or an angular-acceleration characteristic variable.

12. Power tool (12), in particular a portable power tool (12), having at least one power tool device (10) according to one of the preceding claims.

13. Method for operating a power tool device (10), in particular according to one of Claims 1 to 11, wherein at least one braking function of the power tool device (10) is adapted at least partially automatically, to be precise dynamically, in dependence on at least one acquired characteristic variable of the power tool (12) and/or of a work tool (14) arranged on the power tool (12), wherein the braking function is actively changed continuously over time or is actively or passively changed within a period of time or for a duration of a process, **characterized in that** a holding-force acquisition element (32) of an acquisition unit (16) of the power tool device (10) acquires a holding-force characteristic variable of the power tool (12) and/or of the work tool (14) and the braking function is adapted at least partially automatically in dependence on the holding-force characteristic variable, wherein the time for complete braking of the power tool (12) and/or of the work tool (14) is correlated with the holding-force characteristic variable.

## Revendications

1. Dispositif (10) formant outil-machine pour une commande et/ou une régulation d'au moins une fonction d'outil-machine d'un outil-machine (12), en particulier d'un outil-machine (12) portatif, ayant au moins une unité de détection (16) pour une détection d'au moins une grandeur caractéristique de l'outil-machine (12) et/ou d'un outil de travail (14) agencé sur l'outil-machine (12) et ayant au moins une unité de freinage (18), au moins une fonction de freinage de l'unité de freinage (18) étant adaptable au moins partiellement automatiquement, et ce de manière dynamique, en fonction de ladite au moins une grandeur caractéristique détectée, la fonction de freinage étant active en continu dans le temps ou modifiable activement ou passivement à l'intérieur d'une période de temps ou pour une durée temporelle d'une opération, **caractérisé en ce que** l'unité de détection (16) présente un élément (32) de détection de force de maintien pour détecter une grandeur caractéristique de force de maintien de l'outil-machine (12) et/ou de l'outil de travail (14), et la fonction de freinage est adaptable au moins partiellement automatiquement en fonction de la grandeur caractéristique de force de maintien, un temps pour le freinage complet de l'outil-machine (12) et/ou de l'outil de travail (14) étant corrélé à la grandeur caractéristique de force de maintien.

2. Dispositif (10) formant outil-machine selon la revendication 1, **caractérisé en ce que** l'unité de détection (16) comporte un élément (22) de détection d'entraînement pour détecter une grandeur caractéristique d'entraînement d'une unité d'entraînement (20) de l'outil-machine (12) et/ou de l'outil de travail (14), et la fonction de freinage est adaptable au moins partiellement automatiquement en fonction de la grandeur caractéristique d'entraînement.

3. Dispositif (10) formant outil-machine selon la revendication 2, **caractérisé en ce que** la grandeur caractéristique d'entraînement comprend une grandeur caractéristique de démarrage.

4. Dispositif (10) formant outil-machine selon la revendication 2 ou la revendication 3, **caractérisé en ce que** la grandeur caractéristique d'entraînement comprend une grandeur caractéristique de vitesse de rotation.

5. Dispositif (10) formant outil-machine selon l'une des revendications 2 à 4, **caractérisé en ce que** la caractéristique d'entraînement comprend une caractéristique de couple.

6. Dispositif (10) formant outil-machine selon l'une des revendications précédentes, **caractérisé en ce que** l'unité de détection (16) comporte un élément (24) de détection de rebond, ou « kickback », pour détecter une grandeur caractéristique de kickback de l'outil-machine (12) et/ou de l'outil de travail (14), et la fonction de freinage est adaptable au moins en partie automatiquement en fonction de la grandeur caractéristique de kickback.

7. Dispositif (10) formant outil-machine selon l'une des revendications précédentes, **caractérisé en ce que** l'unité de détection (16) comporte un élément (26) de détection d'usure pour détecter une grandeur caractéristique d'usure de l'outil-machine (12) et/ou de l'outil de travail (14), et la fonction de freinage est adaptable au moins partiellement automatiquement en fonction de la grandeur caractéristique d'usure.

8. Dispositif (10) formant outil-machine selon l'une des revendications précédentes, **caractérisé en ce que** l'unité de détection (16) présente un élément (28) de détection de position pour détecter une grandeur caractéristique de position de l'outil-machine (12) et/ou de l'outil de travail (14), et la fonction de freinage est adaptable au moins partiellement automatiquement en fonction de la grandeur caractéristique de position.

9. Dispositif (10) formant outil-machine selon l'une des revendications précédentes, **caractérisé en ce que** l'unité de détection (16) présente un élément (30) de détection de traitement pour détecter une grandeur caractéristique de traitement lors d'un traitement par l'outil-machine (12) et/ou l'outil de travail (14), et la fonction de freinage est adaptable au moins partiellement automatiquement en fonction de la grandeur caractéristique de traitement.

10. Dispositif (10) formant outil-machine selon l'une des revendications précédentes, **caractérisé en ce que** l'unité de détection (16) comporte un élément (34) de détection de température pour détecter une grandeur caractéristique de température de l'outil-machine (12), notamment d'une partie de l'outil-machine (12), et/ou de l'outil de travail (14), et la fonction de freinage est adaptable au moins partiellement automatiquement en fonction de la grandeur caractéristique de température.

11. Dispositif (10) formant outil-machine selon l'une des revendications précédentes, **caractérisé en ce que** l'unité de détection (16) présente un élément (36) de détection d'angle pour détecter une grandeur caractéristique de vitesse angulaire et/ou une grandeur caractéristique d'accélération angulaire de l'outil-machine (12) et/ou de l'outil de travail (14), et la fonction de freinage est adaptable au moins partiellement automatiquement en fonction de la grandeur caractéristique de vitesse angulaire et/ou d'une grandeur caractéristique d'accélération angulaire.

12. Outil-machine (12), notamment outil-machine (12) portatif, comportant au moins un dispositif (10) formant outil-machine selon l'une des revendications précédentes.

13. Procédé de fonctionnement d'un dispositif (10) formant outil-machine, en particulier selon l'une des revendications 1 à 11, dans lequel au moins une fonction de freinage du dispositif (10) formant outil-machine est adaptée au moins en partie automatiquement, et ce de manière dynamique, en fonction d'au moins une grandeur caractéristique détectée de l'outil-machine (12) et/ou d'un outil de travail (14) agencé sur l'outil-machine (12), la fonction de freinage étant active en continu dans le temps ou modifiée activement ou passivement à l'intérieur d'une période de temps ou pour une durée temporelle d'une opération, **caractérisé en ce qu'**un élément (32) de détection de force de maintien d'une unité de détection (16) du dispositif (10) formant outil-machine détecte une grandeur caractéristique de force de maintien de l'outil-machine (12) et/ou de l'outil de travail (14), et la fonction de freinage est adaptée au moins partiellement automatiquement en fonction de la grandeur caractéristique de force de maintien, le temps nécessaire au freinage complet de l'outil-machine (12) et/ou de l'outil de travail (14) étant corrélé à la grandeur caractéristique de force de maintien.
